(19) Europäisches Patentamt
European Patent Office
Office européen des brevets

(11) Veröffentlichungsnummer : **0 035 152**
**B1**

(12) # EUROPÄISCHE PATENTSCHRIFT

(45) Veröffentlichungstag der Patentschrift : **08.02.84**

(21) Anmeldenummer : **81101052.9**

(22) Anmeldetag : **14.02.81**

(51) Int. Cl.³ : **C 09 B 35/215**, C 09 B 67/44// D06P3/32, D06P3/58, D21H1/46

(54) **Polyazofarbstoffe und deren konzentrierte wäßrige Lösungen sowie ihre Verwendung zum Färben cellulosehaltiger Materialien und Leder.**

(30) Priorität : **26.02.80 DE 3007077**

(43) Veröffentlichungstag der Anmeldung : ***09.09.81* Patentblatt 81/36**

(45) Bekanntmachung des Hinweises auf die Patenterteilung : **08.02.84 Patentblatt 84/06**

(84) Benannte Vertragsstaaten :
**CH DE FR GB LI**

(56) Entgegenhaltungen :
**FR-A- 2 216 304**
**US-A- 2 489 463**
**US-A- 4 118 182**
**Die Akte enthält technische Angaben, die nach dem Eingang der Anmeldung eingereicht wurden und die nicht in dieser Patentschrift enthalten sind.**

(73) Patentinhaber : **BAYER AG**
**Zentralbereich Patente, Marken und Lizenzen**
**D-5090 Leverkusen 1, Bayerwerk (DE)**

(72) Erfinder : **Kunde, Klaus, Dr.**
**Auf dem Uppersberg A66**
**D-5090 Leverkusen 1 (DE)**
Erfinder : **Wild, Peter, Dr.**
**Hainstrasse 7**
**D-6305 Alten Buseck (DE)**

**EP 0 035 152 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Polyazofarbstoffe und deren konzentrierte wäßrige Lösungen sowie ihre Verwendung zum Färben cellulosehaltiger Materialien und Leder

Gegenstand der vorliegenden Erfindung sind neue Farbstoffe der allgemeinen Formel

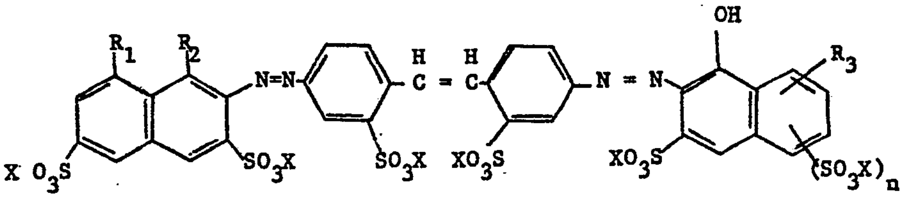

(I)

worin

$R_1$ und $R_2$ für OH oder $NH_2$,

$R_3$ für OH oder $NH_2$

X für Li, Na, K oder $HN(CH_3)$ $(C_2H_4OH)_2$ steht, mit der Maßgabe, daß höchstens 1/3 der $—SO_3X$-Gruppen mit X als Li, Na oder K vorliegen und

n 0 oder 1 ist,

deren konzentrierte wäßrige Lösungen und Verfahren zu ihrer Herstellung, welches dadurch gekennzeichnet ist, daß man als Kupplungsbase Methyl-bis-(2-hydroxyethyl-)-amin anwendet.

Vorteilhaft sind Farbstoffe der allgemeinen Formel I, und deren Lösungen, worin

$R_1$ und $R_2$ für OH oder $NH_2$ stehen

$R_3$ für $NH_2$ steht

X für Li, Na, K oder $HN(CH_3)$ $(C_2H_4OH)_2$ steht, mit der Maßgabe, daß höchstens 1/3 der $SO_3X$-Gruppen mit X als Li, Na oder K vorliegen,

n für 0 steht, wenn $R_3$ 6-$NH_2$ oder 7-$NH_2$ ist und für 1 steht, wenn $R_3$ 5-$NH_2$ ist.

Von ganz besonderem Vorteil sind Farbstoffe der allgemeinen Formel I und deren Lösungen, worin

$R_1$ für OH steht,

$R_2$ für $NH_2$ steht,

$R_3$ für 5-$NH_2$, 6-$NH_2$ oder 7-$NH_2$ steht,

X für Li, Na, K oder HN $(CH_3)$ $(C_2H_4OH)_2$ steht, mit der Maßgabe, daß höchstens 1/3 der $SO_3X$-Gruppen mit X als Li, Na oder K vorliegen,

n für 0 steht, wenn $R_3$ 6-$NH_2$ oder für 1 steht, wenn $R_3$ 5-$NH_2$ ist.

Die Farbstoffe der allgemeinen Formel I, die anstatt $[HN(CH_3)\ (C_2H_4OH)]^{\oplus}$ Metallionen, insbesondere Alkalimetallionen enthalten, sind in Wasser schwer löslich.

Überraschenderweise wurde nun gefunden, daß man gut wasserlösliche Präparate dieser Farbstoffe erhält, wenn man bei der Herstellung der Polyazofarbstoffe (I) als Kupplungsbase Methyl-bis-(2-hydroxyethyl-)-amin verwendet.

Die gebrauchsfertigen wäßrigen Lösungen der Farbstoffe (I) enthalten 20-40 Gew.-% der Farbstoffe der Formel (I), wobei die Substituenten $R_1$, $R_2$, $R_3$, X sowie n die oben angegebene Bedeutung besitzen.

Bei der Herstellung der Farbstoffe (I) ist es wichtig, Metallionen nur in einer solchen Menge in die Lösung zu geben, wie sie in der allgemeinen Formel (I) angegeben ist, d. h. daß höchstens 1/3 der $SO_3X$-Gruppen mit X als Li, Na oder K vorliegen und der Rest mit X als $HN(CH_3)$ $(C_2H_4OH)_2$ vorliegt.

Da die für die Herstellung der Farbstoffe (I) einzusetzenden Kupplungskomponenten der allgemeinen Formel II'

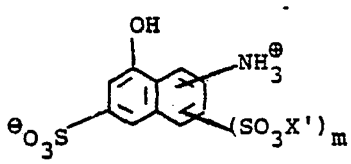

(II')

worin

X' für Li, Na oder K steht und

m 0 oder 1 bedeutet,

infolge ihres Herstellungsverfahrens schon die maximal zulässige Menge an Metallionen in die Lösung einbringen, ist es wichtig, die Diazoniumverbindung der 4,4'-Diaminostilben-2,2'-disulfonsäure möglichst Metallionen-arm herzustellen.

Man erhält ein solches Metallionen-armes Präparat, z. B. indem man die Aminoverbindung der Formel

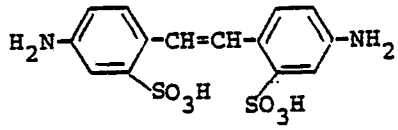

in üblicher Weise diazotiert und die entstandene schwerlösliche Diazoniumverbindung in an sich bekannter Weise isoliert und den Rückstand mit Wasser auswäscht oder wenn man die von Metallionen weitgehend befreite Aminoverbindung mit einem Metallionen-freien Nitrosierungsreagenz diazotiert und die so erhaltene Diazoniumverbindung weiterverwendet.

Die zur Herstellung von Verbindungen der allgemeinen Formel (I) eingesetzten und mit der Diazoniumverbindung der 4,4'-Diaminostilben-2,2'-disulfonsäure eingesetzten Naphthalinderivate besitzen die allgemeinen Formeln

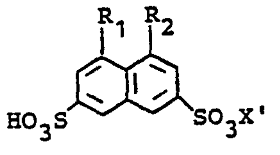

(II)

und

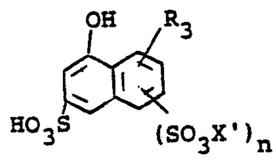

(III)

wobei die Reste $R_1$, $R_2$ und $R_3$ sowie n die oben angegebene Bedeutung besitzen und X' für Li, Na oder K steht.

Kupplungskomponenten der allgemeinen Formel II sind z. B. 4-Hydroxy-5-aminonaphthalin-2,7-disulfonsäure-$Na_1$-Salz, 4-Hydroxy-5-amino-naphthalin-2,8-disulfonsäure-$Na_1$-Salz, 4-Hydroxy-6-aminonaphthalin-2-sulfonsäure, 4-Hydroxy-7-aminonaphthalin-2-sulfonsäure.

Die Kupplung der einzelnen Kupplungskomponenten mit der Diazoniumverbindung erfolgt in an sich bekannter Weise indem man 1 Mol der Diazoniumverbindung entweder mit je 0,5 Mol zweier oder mit 1 Mol einer Kupplungskomponente bei für die stufenweise oder die gleichzeitige Umsetzung geeigneten pH-Werten kuppelt, wie sie z. B. in den folgenden Beispielen angegeben sind.

Beim Herstellungsverfahren fallen Farbstofflösungen an, die gegebenenfalls unter Zusatz von Wasser und wasserlöslichen organischen Lösungsmitteln in gebrauchsfertige vorzugsweise 20 bis 40 Gew.-% Farbstoff (I) enthaltende Lösungen überführt werden. Die so erhaltenen Lösungen färben cellulosehaltige Materialien, insbesondere Papier und Leder in blauen Tönen. Aus den anfallenden Farbstofflösungen lassen sich in einfacher an sich bekannter Weise die Farbstoffe der Formel (I) gewinnen.

## Beispiel 1

26,8 g 4,4'-Diaminostilben-2,2'-disulfonsäure werden mit 200 ml Wasser und 40 g Salzsäure (30 %ig) verrührt und bei ca. 35 °C innerhalb ungefähr einer Stunde mit 34 ml Natriumnitritlösung (26 %ig) versetzt. Es wird noch zwei Stunden nachgerührt, dann wird der Überschuß an salpetriger Säure mit Amidosulfonsäure zerstört. Die Diazoniumverbindung wird abgesaugt, der Rückstand wird mit Wasser ausgewaschen und in 150 ml Wasser, 100 g Harnstoff und 45 g Salzsäure (30 %ig) bei pH 0,5 wieder angerührt. 24,7 g 4-Hydroxy-5-amino-naphthalin-2,7-di-sulfonsäure-$Na_1$-Salz werden zugesetzt, dann wird über Nacht bei ca. 20 °C gerührt. Am nächsten Morgen werden 24,7 g 4-Hydroxy-5-aminonaphthalin-2,7-disulfonsäure-$Na_1$-Salz in 100 ml Wasser verrührt und durch Zugabe von ca. 8 g Methyl-bis-(2-hydroxy-ethyl-)-amin bei pH 7,5 gelöst. Zu dieser Lösung wird bei ca. 20 °C das obige Gemisch langsam zugegeben, wobei der pH-Wert durch Zugabe von weiteren ca. 160 g Methyl-bis-(2-hydroxyethyl-)-amin konstant gehalten wird. Zur Vervollständigung der Kupplung wird noch drei Stunden nachgerührt. Gegebenenfalls vorhandene geringe Mengen von Farbstoff werden durch Filtration entfernt, schließlich wird die erhaltene Lösung mit Wasser auf die gewünschte Farbstärke verdünnt.

## Beispiel 2-4

Verwendet man anstelle der in Beispiel 1 angegebenen zweiten Menge 4-Hydroxy-5-aminonaphthalin-2,7-disulfonsäure-$Na_1$-Salz eine äquivalente Menge 4-Hydroxy-6-aminonaphthalin-2-sulfonsäure, 4-Hydroxy-7-aminonaphthalin-2-sulfonsäure oder 4-Hydroxy-5-aminonaphthalin-2,8-disulfonsäure-$Na_1$-Salz, so erhält man ebenfalls konzentrierte Farbstofflösungen.

## Beispiel 5

26,8 g 4,4'-Diaminostilben-2,2'-disulfonsäure werden wie in Beispiel 1 diazotiert. Die Diazoniumverbindung wird isoliert, mit Wasser ausgewaschen und in 50 ml Wasser suspendiert. 49,4 g 4-Hydroxy-5-aminonaphthalin-2,7-disulfonsäure-$Na_1$-Salz werden in 100 ml Wasser suspendiert und durch Zugabe von ca. 17 g Methyl-bis (2-hydroxyethyl-)-amin bei pH 7,5 und ca. 20 °C in Lösung gebracht. Zu dieser Lösung wird die Suspension der Diazoniumverbindung langsam zugegeben, wobei der pH-Wert durch Zugabe von insgesamt ca. 20 g Methyl-bis-(2-hydroxyethyl-)-amin konstant gehalten wird. Man verfährt weiter wie in Beispiel 1 und erhält ebenfalls eine konzentrierte Farbstofflösung.

Beispiel 6-8

Verwendet man anstelle einer Hälfte der in Beispiel 5 eingesetzten Kupplungskomponente eine äquivalente Menge der in den Beispielen 2-4 verwendeten Kupplungskomponenten, so erhält man ebenfalls konzentrierte Farbstofflösungen.

**Ansprüche**

1. Farbstoffe der allgemeinen Formel

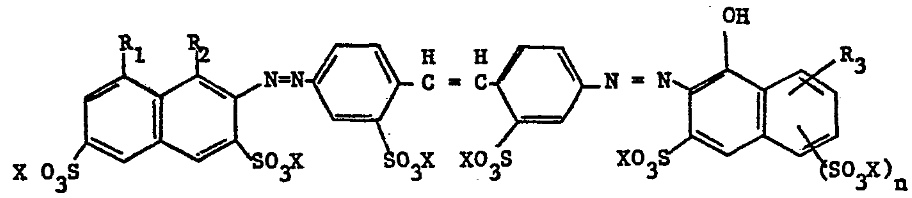

(I)

worin

$R_1$ und $R_2$ für OH oder $NH_2$

$R_3$ für OH oder $NH_2$

X für Na oder $HN(CH_3)(C_2H_4OH)_2$ steht, mit der Maßgabe, daß höchstens 1/3 der $SO_3X$-Gruppen mit X als Na vorliegen und

n 0 oder 1 ist.

2. Konzentrierte wäßrige Farbstofflösungen, welche einen Farbstoff gemäß Anspruch 1 und gegebenenfalls mit Wasser mischbare Lösungsmittel enthalten.

3. Farbstoffe gemäß der allgemeinen Formel (I) aus Anspruch 1, in welcher

$R_1$ und $R_2$ für OH oder $NH_2$

$R_3$ für $NH_2$ und

X für Na oder $HN(CH_3)(C_2H_4OH)_2$ steht, mit der Maßgabe, daß höchstens 1/3 der $SO_3X$-Gruppen mit X als Na vorliegen.

4. Konzentrierte wäßrige Farbstofflösungen, welche einen Farbstoff gemäß Anspruch 3 und gegebenenfalls mit Wasser mischbare Lösungsmittel enthalten.

5. Farbstoffe gemäß Formel (I) aus Anspruch 1, in welcher

$R_1$ für OH,

$R_2$ für $NH_2$

$R_3$ für 5-$NH_2$, 6-$NH_2$ oder 7-$NH_2$ steht,

X für Na oder $HN(CH_3)(C_2H_4OH)_2$ steht, mit der Maßgabe, daß höchstens 1/3 der $SO_3X$-Gruppen mit X als Na vorliegen,

n für 0 steht, wenn $R_3$ 6-$NH_2$ oder 7-$NH_2$ ist

oder

n für 1 steht, wenn $R_3$ 5-$NH_2$ bedeutet.

6. Konzentrierte wäßrige Farbstofflösungen, welche einen Farbstoff gemäß Anspruch 5 und gegebenenfalls mit Wasser mischbare organische Lösungsmittel enthalten.

7. Verwendung von Farbstoffen gemäß Ansprüche 1 bis 3 zum Färben von cellulosehaltigen Materialien.

8. Mit Hilfe von Farbstoffen gemäß Ansprüche 1 bis 3 gefärbtes cellulosehaltiges Material.

9. Mit Hilfe von Farbstoffen gemäß Ansprüche 1 bis 3 gefärbtes Leder.

**Claims**

1. Dyestuffs of the general formula

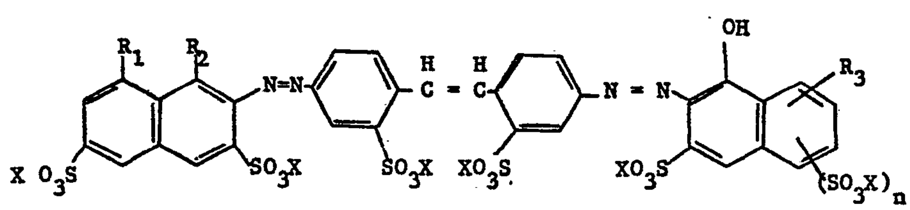

(I)

wherein

$R_1$ and $R_2$ represents OH or $NH_2$,

$R_3$ represents OH or $NH_2$,

X represents Na or $HN(CH_3)(C_2H_4OH)_2$, with the proviso that in at most 1/3 of the $SO_3X$ groups, X is Na and

n is 0 or 1.

2. Concentrated aqueous dyestuff solutions which contain a dyestuff according to Claim 1 and, if appropriate, water-miscible solvents.

3. Dyestuffs according to the general formula (I) from Claim 1, in which

$R_1$ and $R_2$ represents OH or $NH_2$,

$R_3$ represents $NH_2$ and

X represents Na or $HN(CH_3)(C_2H_4OH)_2$, with the proviso that in at most 1/3 of the $SO_3X$ groups, X is Na.

4. Concentrated aqueous dyestuff solutions which contain a dyestuff according to Claim 3 and, if appropriate, water-miscible solvents.

5. Dyestuffs according to formula (I) from Claim 1, in which

$R_1$ represents OH,

$R_2$ represents $NH_2$,

$R_3$ represents 5-$NH_2$, 6-$NH_2$ or 7-$NH_2$,

X represents Na or $HN(CH_3)(C_2H_4OH)_2$, with the proviso that in at most 1/3 of the $SO_3X$ groups, X is Na, and

n represents 0, if $R_3$ is 6-$NH_2$ or 7-$NH_2$,

or

n represents 1, if $R_3$ denotes 5-$NH_2$.

6. Concentrated aqueous dyestuff solutions which contain a dyestuff according to Claim 5 and, if appropriate, water-miscible organic solvents.

7. Use of dyestuffs according to Claims 1 to 3 for dyeing cellulose-containing materials.

8. Cellulose-containing material dyed with the aid of dyestuffs according to Claims 1 to 3.

9. Leather dyed with the aid of dyestuffs according to Claims 1 to 3.

**Revendications**

1. Colorants de formule générale

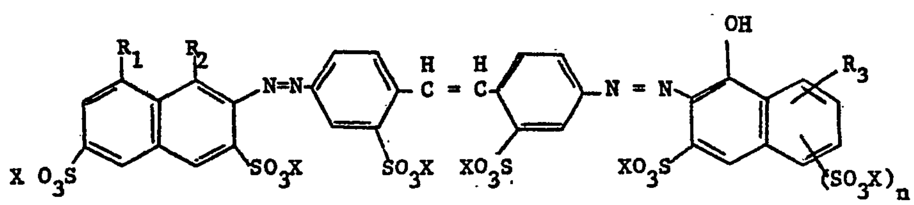

(I)

dans laquelle

$R_1$ et $R_2$ représentent OH ou $NH_2$,

$R_3$ représente OH ou $NH_2$,

X représente Na ou $NH(CH_3)(C_2H_4OH)_2$, étant spécifié que dans un tiers au maximum des groupes $SO_3X$, X représente Na; et

n est égal à 0 ou 1.

2. Solutions aqueuses concentrées de colorants contenant un colorant selon la revendication 1, et le cas échéant des solvants miscibles à l'eau.

3. Colorants de formule générale I selon la revendication 1, dans laquelle

$R_1$ et $R_2$ représentent OH ou $NH_2$,

$R_3$ représente $NH_2$, et

X représente Na ou $HN(CH_3)(C_2H_4OH)_2$, étant spécifié que, dans un tiers au maximum des groupes $SO_3X$, X représente Na.

4. Solutions aqueuses concentrées de colorants contenant un colorant selon la revendication 3 et le cas échéant des solvants miscibles à l'eau.

5. Colorants de formule I selon la revendication 1, dans laquelle

$R_1$ représente OH,

$R_2$ représente $NH_2$,

$R_3$ représente un groupe 5-$NH_2$, 6-$NH_2$ ou 7-$NH_2$,

X représente Na ou $HN(CH_3)(C_2H_4OH)_2$, étant spécifié que dans un tiers au maximum des groupes $SO_3X$, X représente Na,

n est égal à 0 lorsque $R_3$ représente un groupe 6-$NH_2$ ou 7-$NH_2$,

ou bien,

n est égal à 1 lorsque $R_3$ représente un groupe 5-$NH_2$.

6. Solutions aqueuses concentrées de colorants contenant un colorant selon la revendication 5 et éventuellement des solvants organiques miscibles à l'eau.
7. Utilisation des colorants selon les revendications 1 à 3 pour la teinture des matières cellulosiques.
8. Matière cellulosique teinte à l'aide de colorants selon les revendications 1 à 3.
9. Cuir teint à l'aide de colorants selon les revendications 1 à 3.